(19) Europäisches Patentamt / European Patent Office / Office européen des brevets

(11) **EP 4 336 585 A1**

(12) **EUROPEAN PATENT APPLICATION**
published in accordance with Art. 153(4) EPC

(43) Date of publication:
**13.03.2024 Bulletin 2024/11**

(21) Application number: **22896147.0**

(22) Date of filing: **18.11.2022**

(51) International Patent Classification (IPC):
*H01M 4/131* (2010.01)   *H01M 4/1391* (2010.01)
*H01M 4/62* (2006.01)   *H01M 4/525* (2010.01)
*H01M 4/505* (2010.01)   *H01M 10/052* (2010.01)
*H01M 4/36* (2006.01)   *H01M 4/48* (2010.01)
*H01M 4/587* (2010.01)   *H01M 4/02* (2006.01)

(52) Cooperative Patent Classification (CPC):
H01M 4/02; H01M 4/131; H01M 4/1391;
H01M 4/36; H01M 4/48; H01M 4/505; H01M 4/525;
H01M 4/587; H01M 4/62; H01M 10/052;
Y02E 60/10

(86) International application number:
**PCT/KR2022/018340**

(87) International publication number:
**WO 2023/090950 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.11.2021 KR 20210160759**

(71) Applicant: **LG Energy Solution, Ltd.**
**Seoul 07335 (KR)**

(72) Inventors:
• **KIM, Jeeeun**
  **Daejeon 34122 (KR)**
• **LEE, Sora**
  **Daejeon 34122 (KR)**
• **LIM, Seong Min**
  **Daejeon 34122 (KR)**

(74) Representative: **Hoffmann Eitle**
**Patent- und Rechtsanwälte PartmbB**
**Arabellastraße 30**
**81925 München (DE)**

(54) **COMPOSITION FOR CATHODE ACTIVE MATERIAL LAYER, AND LITHIUM SECONDARY BATTERY**

(57) The present invention relates to a composition for a positive electrode active material layer of a lithium secondary battery, including a positive electrode active material including a lithium composite transition metal compound which includes nickel, cobalt and manganese, includes 80 mol% or more and less than 100 mol% of nickel among the metals except for lithium, and is in the form of a single particle, and an additive represented by Chemical Formula A, and a positive electrode, a lithium secondary battery, a battery module and a battery pack, which include the same.

[Figure 1]

EP 4 336 585 A1

## Description

[Technical Field]

This application claims priority to and the benefit of Korean Patent Application No. 10-2021-0160759 filed in the Korean Intellectual Property Office on November 19, 2021, the entire contents of which are incorporated herein by reference.

The present application relates to a composition for a positive electrode active material layer and a lithium secondary battery.

[Background Art]

Recently, with the rapid spread of electronic devices using batteries, such as not only mobile phones, notebook-sized computers, and electric vehicles, but also power tools and cleaners, the demand for small and lightweight secondary batteries having relatively high capacity and/or high output is rapidly increasing. In particular, lithium secondary batteries are lightweight and have high energy density, and thus have attracted attention as driving power sources for electronic devices. Accordingly, research and development efforts to improve the performance of lithium secondary batteries have been actively conducted.

The lithium secondary battery generates electric energy by oxidation and reduction reactions during intercalation and deintercalation of lithium ions at a positive electrode and a negative electrode in a state in which an organic electrolytic solution or polymer electrolytic solution is filled between the positive electrode and the negative electrode, which are composed of active materials capable of intercalating and deintercalating lithium ions.

Lithium cobalt oxide ($LiCoO_2$), lithium nickel oxide ($LiNiO_2$), lithium manganese oxide ($LiMnO_2$, $LiMn_2O_4$, and the like), a lithium iron phosphate compound ($LiFePO_4$) and the like have been used as a positive electrode active material of a lithium secondary battery. Among them, lithium cobalt oxide ($LiCoO_2$) is widely used because of advantages of high operating voltage and excellent capacity characteristics, and is applied as a high voltage positive electrode active material. However, due to rising prices and unstable supply of cobalt (Co), there is a limit to its large-scale usage as a power source in fields such as electric vehicles, so there is an emerging need for developing a positive electrode active material capable of replacing cobalt.

Accordingly, a nickel-cobalt-manganese-based lithium composite transition metal oxide (hereinafter simply referred to as 'NCM-based lithium composite transition metal oxide') in which a part of cobalt (Co) is substituted with nickel (Ni) and manganese (Mn) has been developed. Recently, research has been conducted to increase the capacity of NCM-based lithium composite transition metal oxide by increasing the content of Ni in the oxide. However, a Ni-rich positive electrode active material with a high nickel content has disadvantages such as increase in resistance and increase in gas generation due to deterioration in thermal stability and increase in side reactions during electrochemical reactions.

Meanwhile, although graphite is usually used as a negative electrode active material for a lithium secondary battery, it is difficult to increase the capacity of the lithium secondary battery because graphite has a small capacity per unit mass of 372 mAh/g. Accordingly, in order to increase the capacity of a lithium secondary battery, negative electrode materials such as silicon, tin and oxides thereof have been developed as non-carbon-based negative electrode materials having higher energy density than graphite. However, although these non-carbon-based negative electrode materials have a large capacity, these materials have a problem in that the amount of lithium consumed is large and the irreversible capacity loss is large during the initial charging and discharging due to the low initial efficiency.

[Detailed Description of the Invention]

[Technical Problem]

The present inventors intend to provide a composition for a positive electrode active material layer of a lithium secondary battery, which is capable of improving the performance of a battery, and a positive electrode, a lithium secondary battery, a battery module and a battery pack, which include the same.

[Technical Solution]

An exemplary embodiment of the present application provides a composition for a positive electrode active material layer of a lithium secondary battery, including: a positive electrode active material including a lithium composite transition metal compound which includes nickel, cobalt and manganese, includes nickel in an amount of 80 mol% or more and less than 100 mol% among the metals except for lithium and is in the form of a single particle; and

an additive represented by the following Chemical Formula A:

[Chemical Formula A] $Li_xCo_{(1-y-z-m)}Zn_yAl_zM_mO_4$

in Chemical Formula A, M is Ti, Zr, Mn or Ni, $5 \leq x \leq 7$, $0 < y \leq 0.5$, $0 < z \leq 0.5$, $0 < y+z+m < 1$, and $0 \leq m \leq 0.5$.

An additional exemplary embodiment of the present application provides a lithium secondary battery positive electrode including: a positive electrode current collector; and a positive electrode active material layer provided on the positive electrode current collector and including the composition according to the above-described exemplary embodiment.

An additional exemplary embodiment of the present application provides a lithium secondary battery including: a positive electrode; a negative electrode; a separator between the positive electrode and the negative electrode; and an electrolyte,

in which the positive electrode includes a positive electrode current collector and a positive electrode active material layer provided on the positive electrode current collector and the negative electrode includes a negative electrode current collector and a negative electrode active material layer provided on the negative electrode current collector, and

the positive electrode active material layer includes the composition according to the above-described exemplary embodiment.

According to an additional exemplary embodiment of the present application, the negative electrode active material layer of the above-described exemplary embodiment includes a silicon-based oxide in an amount of 15 parts by weight or more with respect to 100 parts by weight of the entire negative electrode active material.

An additional exemplary embodiment of the present application provides a battery module including the above-described lithium secondary battery and a battery pack including the battery module.

[Advantageous Effects]

According to the exemplary embodiments described in the present specification, the energy density of a lithium secondary battery designed in a limited space can be increased, the high output performance thereof can be improved, and the battery cycle performance can also be improved.

[Brief Description of Drawings]

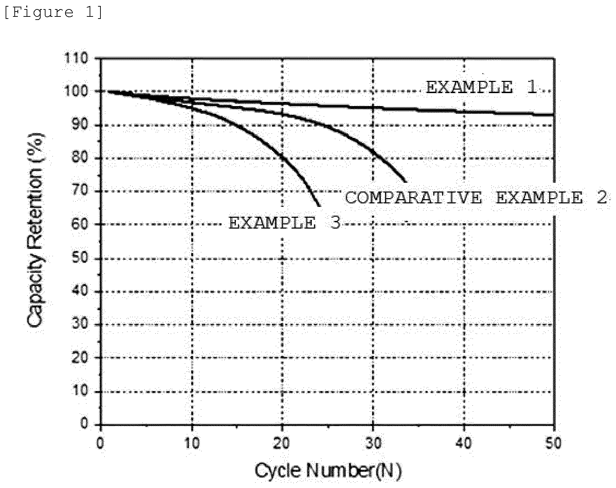

FIG. 1 illustrates a 55°C cycle graph of batteries manufactured in Examples 1 and 3 and Comparative Example 2.

[Best Mode]

Hereinafter, the present invention will be described in more detail in order to help the understanding of the present invention. The present invention can be implemented in various different forms, and is not limited to the exemplary embodiments described herein. In this case, terms or words used in the specification and the claims should not be interpreted as being limited to typical or dictionary meanings and should be interpreted with a meaning and a concept that are consistent with the technical spirit of the present invention based on the principle that an inventor can appropriately define a concept of a term in order to describe his/her own invention in the best way.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

Further, a case where a part such as a layer is present "above" or "on" another part includes not only a case where the part is present "immediately above" another part, but also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

An exemplary embodiment of the present application provides a composition for a positive electrode active material layer of a lithium secondary battery, including:

a positive electrode active material including a lithium composite transition metal compound which includes nickel, cobalt and manganese, includes nickel in an amount of 80 mol% or more and less than 100 mol% among the metals except for lithium and is in the form of a single particle; and

an additive represented by the following Chemical Formula A:

[Chemical Formula A]    $Li_xCo_{(1-y-z-m)}Zn_yAl_zM_mO_4$

in Chemical Formula A, M is Ti, Zr, Mn or Ni, $5 \leq x \leq 7$, $0 < y \leq 0.5$, $0 < z \leq 0.5$, $0 < y+z+m < 1$, and $0 \leq m \leq 0.5$.

A lithium secondary battery has a size required by its use, and needs to be designed within a limited space. Although consumer demand for increase in energy density and improvement in high output performance is increasing, there is no choice but to increase the content of negative electrode materials to match the demand when a high-capacity positive electrode material is used, so that there is a limit to increasing the battery efficiency in a limited space. In addition, depending on the type of negative electrode material, it is necessary to design a positive electrode material having an efficiency that matches the efficiency of the negative electrode material.

The composition for a positive electrode active material layer according to the exemplary embodiment of the present invention may be useful when a silicon-based oxide is used as a negative electrode active material. Specifically, when a silicon-based oxide is used as a negative electrode active material, it is characterized by using a specific composition as a positive electrode material so as to match the efficiency of the negative electrode active material. In particular, a lithium composite transition metal oxide including nickel, cobalt and manganese is used as a positive electrode active material, but it is characterized in that nickel is included in a content of 80 mol% or more and less than 100 mol% among the metals except for lithium, the form of a single particle is used and simultaneously, a specific type of additive is used together.

The silicon-based oxide used as the negative electrode active material has an efficiency, for example, a ratio of the discharge capacity with respect to the charge capacity of the first cycle (charge 0.1 C to 5 mV, 0.005 C cut-off and discharge 0.1 C to 1.5 V) of typically 70% to 90% and a discharge capacity level of 1,000 to 1,600 mAh/g. As described above, the silicon-based oxide has a high capacity, and thus, may be used to increase the energy density of a battery and implement a high output, but the silicon-based oxide has low efficiency compared to graphite, so that the efficiency of the positive electrode needs to be lowered so as to match the efficiency of the negative electrode.

Therefore, in the exemplary embodiment, a silicon-based oxide is used as a negative electrode active material, and simultaneously, a high capacity material with a relatively high nickel content is used as a positive electrode active material, but by using the form of a single particle, the efficiency of the positive electrode may be made to match the efficiency of the negative electrode.

Specifically, the present inventors confirmed that in the case of a lithium composite transition metal oxide with a high nickel content, the powder resistance of single particles is slightly higher than that of secondary particles, and may match the positive electrode efficiency to the negative electrode efficiency when a silicon-based oxide is used as a negative electrode active material by adopting the single particles as a positive electrode active material.

Further, it is characterized by using the above-described material of chemical formula A as an additive. The additive of Chemical Formula A may provide a lithium ion source or reservoir to compensate for the irreversible capacity loss of the silicon-based oxide used as a negative electrode active material, but has a property of low efficiency compared to a general positive electrode active material. In addition, the material of Chemical Formula A has a high capacity compared to $LiNiO_2$, and thus may be blended in a relatively small amount and used. $LiNiO_2$ is vulnerable to moisture exposure in the atmosphere, and may cause gelation, for example, gelation problems of PVDF while gas is generated in the battery, thermal safety deteriorates and by-products are increased in the slurry. In contrast, the material of Chemical Formula A may serve to match the capacity and efficiency of the positive electrode with those of the negative electrode even in a relatively small amount, and may secure moisture stability and slurry stability compared to other materials such as $LiNiO_2$.

According to another exemplary embodiment of the present application, the lithium composite transition metal compound including nickel, cobalt and manganese and including 80 mol% or more and less than 100 mol% of nickel among the metals except for lithium may include one or a mixture of two or more represented by the following Chemical Formula 1.

[Chemical Formula 1]    $Li_aNi_{1-b-c-d}Co_bMn_cQ_dO_{2+\delta}$

In the chemical formula, Q is any one or more elements selected from the group consisting of Na, K, Mg, Ca, Sr, Ni, Co, Ti, Al, Si, Sn, Mn, Cr, Fe, V and Zr, $1 \leq a \leq 1.5$, $0 < b \leq 0.5$, $0 < c \leq 0.5$, $0 \leq d \leq 0.1$, $0 < b+c+d \leq 20$, and $-0.1 \leq \delta \leq 1.0$.

In the lithium composite transition metal oxide of Chemical Formula 1, Li may be included in the content corresponding to a, that is, $1 \leq a \leq 1.5$. There is a concern in that when a is less than 1, the capacity may be reduced, and when a exceeds 1.5, the particles may be sintered in the firing process, making it difficult to prepare a positive electrode active material. Considering the remarkable effect of improving the capacity characteristics of the positive electrode active material by controlling the content of Li and the balance for sinterability during the preparation of the active material, Li may be included more preferably in a content of $1.1 \leq a \leq 1.2$.

In the lithium composite transition metal oxide of Chemical Formula 1, Ni may be included in a content corresponding to 1-(b+c+d), for example, $0.8 \leq 1-(b+c+d) < 1$. When the content of Ni in the lithium composite transition metal oxide of Chemical Formula 1 becomes a composition of 0.8 or more, a sufficient amount of Ni to contribute to charge/discharge may be secured to achieve a high capacity. Preferably, 1-(b+c+d) that is the content of Ni may be 0.8 or more, preferably 0.83 or more, and more preferably 0.85 or more. Preferably, 1-(b+c+d) that is the content of Ni may be 0.99 or less, or 0.96 or less.

In the lithium composite transition metal oxide of Chemical Formula 1, Co may be included in a content corresponding to b, that is, $0<b\leq0.5$. When the content of Co in the lithium composite transition metal oxide of Chemical Formula 1 exceeds 0.5, there is a concern in that the cost is increased. Considering the remarkable effect of improving capacity characteristics due to including Co, Co may be more specifically included in a content of $0.05\leq b\leq0.2$.

In the lithium composite transition metal oxide of Chemical Formula 1, Mn may be included in a content corresponding to c, that is, a content of $0<c\leq0.5$. There is a concern in that when c in the lithium composite transition metal oxide of Chemical Formula 1 exceeds 0.5, the output characteristics and capacity characteristics of the battery may rather deteriorate, and the Mn may be included more specifically in a content of $0.05\leq c\leq0.2$.

In the lithium composite transition metal oxide of Chemical Formula 1, Q may be a doping element included in the crystal structure of the lithium composite transition metal oxide, and Q may be included in a content corresponding to d, that is, $0\leq d\leq0.1$. Q may be one or two or more selected among Na, K, Mg, Ca, Sr, Ni, Co, Ti, Al, Si, Sn, Mn, Cr, Fe, V and Zr, and for example, Q may be Al.

In the present specification, the single particle is a term used to distinguish single particles from positive electrode active material particles in the form of secondary particles formed by aggregation of tens to hundreds of primary particles in the related art, and is a concept including a single particle composed of one primary particle and aggregate particles of 10 or less primary particles.

In an exemplary embodiment of the present application, the single particles may have an average particle diameter (D50) of 1 um to 10 um, preferably 2 um to 7 um, and for example, 3 um to 7 $\mu$m.

Even though the single particles are formed as small particle diameters having an average particle diameter (D50) of approximately 1 um to 10 $\mu$m, the particle strength may be excellent. For example, the positive electrode active material in the form of a single particle may have a particle strength of 100 MPa to 300 MPa when rolled with a force of 650 $kgf/cm^2$.

As a result, even though the positive electrode active material in the form of a single particle is rolled with a strong force of 650 $kgf/cm^2$, a phenomenon in which the number of particulates in the electrode due to cracking of the particles is increased is alleviated, thereby improving the service life characteristics of the battery.

The method of forming the lithium composite transition metal oxide in the form of a single particle is not particularly limited, but in general, single particles may be formed by increasing the firing temperature to achieve overfiring, and single particles may be prepared by a method of using an additive such as a grain growth promoter that helps overfiring or changing a starting material, and the like.

In an exemplary embodiment of the present application, the additive represented by Chemical Formula A is represented by the following Chemical Formula A:

$$[\text{Chemical Formula A}] \qquad Li_xCo_{(1-y-z-m)}Zn_yAl_zM_mO_4$$

in Chemical Formula A, M is Ti, Zr, Mn or Ni, $5 \leq x \leq 7$, $0 < y \leq 0.5$, $0 < z \leq 0.5$, $0 < y+z+m < 1$, and $0 \leq m \leq 0.5$.

In Chemical Formula A, when m is 0, the additive may be represented by the following Chemical Formula A-1.

$$[\text{Chemical Formula A-1}] \qquad Li_xCo_{(1-y-z-m)}Zn_yAl_zO_4$$

When M is present, M may be Ti, Zr, Mn or Ni, for example, Zr.

In Chemical Formulae A and A-1, x, y, z and m may be $5.5 \leq x \leq 6.5$, $0.2 \leq y \leq 0.4$, $0 < z \leq 0.1$, and $0 \leq m \leq 0.1$, respectively.

In an exemplary embodiment of the present application, the additive represented by Chemical Formula A may be included in an amount of 0.3 parts by weight to 10 parts by weight with respect to 100 parts by weight of the above-described positive electrode active material.

The additive represented by Chemical Formula A may be included in an amount of 0.3 parts by weight or more, 0.4 parts by weight or more, or 0.5 parts by weight or more with respect to 100 parts by weight of the positive electrode active material. The additive represented by Chemical Formula A may be included in an amount of 10 parts by weight or less, 8 parts by weight or less, 6 parts by weight or less, 4 parts by weight or less, 2 parts by weight or less, 1 part by weight less, or 0.8 parts by weight or less with respect to 100 parts by weight of the positive electrode active material.

Using a content within the range as described above is advantageous in matching the efficiencies of the positive electrode and the negative electrode by adding the additive represented by Chemical Formula A. It is preferred that the efficiency of the positive electrode due to the combination of the positive electrode active material in the form of the single particle included in the positive electrode and the additive represented by Chemical Formula A is designed to be lower than the efficiency of the negative electrode due to the negative electrode active material including a silicon-based oxide or a mixture of a silicon-based oxide and a carbon-based active material. Therefore, the content of the additive represented by Chemical Formula A may be determined according to the capacity and efficiency of the active materials of the positive electrode and the negative electrode, and in particular, according to the content of the silicon-based oxide.

According to an additional exemplary embodiment of the present application, in the composition for a positive electrode active material layer according to the above-described exemplary embodiment, the lithium composite transition metal compound which includes nickel, cobalt and manganese, includes 80 mol% or more and less than 100 mol% of nickel among the metals except for lithium, and is in the form of a single particle may be included in an amount of 90 parts by weight to 100 parts by weight, for example, 100 parts by weight with respect to 100 parts by weight of the entire positive electrode active material.

In an additional exemplary embodiment of the present application, the composition for a positive electrode active material layer may further include a positive electrode active material in the form of secondary particles, but the content thereof may be 10 parts by weight or less based on 100 parts by weight of the positive electrode active material included in the positive electrode active material layer. Accordingly, the above-described effects due to the presence of the positive electrode active material in the form of a single particle may be maximized. When the positive electrode active material in the form of the secondary particle is included, the components may be the same as those exemplified as the above-described single particle positive electrode active material, but may mean a form of aggregation of single particle forms.

According to an additional exemplary embodiment of the present application, the composition for a positive electrode active material layer according to the above-described exemplary embodiment may further include a positive electrode binder and a conductive material.

The positive electrode binder serves to improve the bonding between positive electrode active material particles and the adhesion between the positive electrode active material particles and the positive electrode current collector. As the positive electrode binder, those known in the art may be used, non-limiting examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The positive electrode binder may be included in an amount of 0.1 parts by weight or more and 50 parts by weight or less, for example, preferably 0.3 parts by weight or more and 35 parts by weight or less, and more preferably 0.5 parts by weight or more and 20 parts by weight or less, based on 100 parts by weight of the composition for a positive electrode active material layer.

The conductive material included in the composition for a positive electrode active material layer is used to impart conductivity to the electrode, and can be used without particular limitation as long as the conductive material has electron conductivity without causing a chemical change in a battery. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Specifically, in an exemplary embodiment, the conductive material may include one or more of single-walled carbon nanotube (SWCNT); and multi-walled carbon nanotube (MWCNT). The conductive material may be included in an amount of 0.1 parts by weight or more and 2 parts by weight or less, for example, preferably 0.3 parts by weight or more and 1.5 parts by weight or less, and more preferably 0.5 parts by weight or more and 1.2 parts by weight or less, based on 100 parts by weight of the composition for a positive electrode active material layer.

According to an additional exemplary embodiment of the present application, the composition for a positive electrode active material layer has a viscosity of 10,000 cps or less when stored at 40°C and RH 10% for 3 days. The viscosity may be a slurry viscosity when a positive electrode slurry is prepared from the composition for a positive electrode active material layer and then stored in an environment of 40°C and RH 10% for 3 days.

The viscosity is a value measured by a Brookfield viscometer at a No. 64 spindle and 12 rpm, and the RH 10% means the humidity range.

The composition for a positive electrode active material layer may have a viscosity of 1,000 cps or more, 2,000 cps or more, 3,000 cps or more, or 4,000 cps or more when stored at 40°C and RH 10% for 3 days. The composition for a positive electrode active material layer may have a viscosity of 10,000 cps or less, 9,000 cps or less, 8,000 cps or less, or 7,000 cps or less when stored at 40°C and RH 10% for 3 days.

As the additive represented by Chemical Formula A is included, the composition for a positive electrode active material layer may satisfy the above range, and is advantageous in securing moisture stability and slurry stability. Specifically, although $LiNiO_2$ is vulnerable to moisture exposure in the atmosphere, and may cause gelation, for example, gelation problems of PVDF while by-products are increased in the slurry, the additive represented by Chemical Formula A may serve to match the capacity and efficiency of the positive electrode with those of the negative electrode even in a relatively small amount, and may secure moisture stability, and slurry stability by preventing gelation in the slurry compared to other materials such as $LiNiO_2$.

An additional exemplary embodiment of the present application provides a lithium secondary battery positive electrode including:

a positive electrode current collector; and
a positive electrode active material layer provided on the positive electrode current collector and including the composition for a positive electrode active material layer according to the above-described exemplary embodiments.

An additional exemplary embodiments of the present application provides a lithium secondary battery including: a positive electrode; a negative electrode; a separator between the positive electrode and the negative electrode; and an electrolyte,

in which the positive electrode includes a positive electrode current collector and a positive electrode active material layer provided on the positive electrode current collector and the negative electrode includes a negative electrode current collector and a negative electrode active material layer provided on the negative electrode current collector, and
the positive electrode active material layer includes the composition for a positive electrode active material layer according to the above-described exemplary embodiments.

According to an additional exemplary embodiment of the present application, in the lithium secondary battery according to the above-described exemplary embodiment, the silicon-based oxide is included in an amount of 15 parts by weight or more based on 100 parts by weight of the negative electrode active material included in the negative electrode active material layer.

Based on 100 parts by weight of the negative electrode active material included in the negative electrode active material layer, the silicon-based oxide may be included in an amount of 15 parts by weight or more and 70 parts by weight or less, preferably, 15 parts by weight or more and 60 parts by weight or less.

Based on 100 parts by weight of the negative electrode active material included in the negative electrode active material layer, the silicon-based oxide may be included in an amount of 15 parts by weight or more, 15.5 parts by weight or more, 16 parts by weight or more, 16.5 parts by weight or more, and 17 parts by weight or more. Based on 100 parts by weight of the negative electrode active material included in the negative electrode active material layer, the silicon-based oxide may be included in an amount of 70 parts by weight or less, 60 parts by weight or less, 30 parts by weight or less, 20 parts by weight or less, or less than 20 parts by weight.

Using a silicon-based oxide within the above range is advantageous in implementing high capacity and high output performance. For example, the higher the content of silicon oxide, the more advantageous it is to implement high output, but the thickness of the negative electrode may become thin, so that an appropriate thickness range for implementing processability in a mass production line needs to be designed. By using the silicon-based oxide within the above range, high output performance and processability may be implemented.

The silicon-based oxide included in the negative electrode active material layer may be present in the form of particles, and may include $SiO_x$ (0<x<2). The $SiO_x$ (0<x<2) may correspond to a matrix in the silicon-based oxide particles. The $SiO_x$ (0<x<2) may be in a form including Si and $SiO_2$, and the Si may also form a phase. That is, the x corresponds to the number ratio of O for Si included in the $SiO_x$ (0<x<2). When the silicon-based oxide particles include the $SiO_x$ (0<x<2), the discharge capacity of a secondary battery may be improved.

In an additional exemplary embodiment of the present application, the silicon-based oxide may further include a metal or metal oxide. For example, the silicon-based oxide may further include at least one of Li and Mg or a compound phase thereof.

When the silicon-based oxide includes Mg, the Mg may be present as a Mg compound phase. The Mg compound phase may include at least any one selected from the group consisting of, for example, Mg silicates, Mg silicides and Mg oxides. The Mg silicate may include at least any one of $Mg_2SiO_4$ and $MgSiO_3$. The Mg silicide may include $Mg_2Si$. The Mg oxide may include MgO.

When the silicon-based oxide includes Li, the Li may be present as a Li compound phase. The Li compound phase may be present in the form of at least one of a lithium silicate, a lithium silicide, and a lithium oxide. The Li compound phase may be a lithium silicate, may be, for example, represented by $Li_aSi_bO_c$ ($2 \leq a \leq 4$, $0 < b \leq 2$, $2 \leq c \leq 5$), and more specifically, may include one or more selected from the group consisting of $Li_2SiO_3$, $Li_2Si_2O_5$, $Li_3SiO_3$, and $Li_4SiO_4$.

The Mg compound and/or Li compound are/is in a form in which particles of the silicon-based oxide are doped with the compound(s), and may be distributed on the surface and/or inside of the silicon-based compound particle. The Mg compound and/or Li compound are/is distributed on the surface and/or inside of the silicon-based oxide particle, and thus may control the volume expansion/contraction of the silicon-based oxide particles to an appropriate level, and may serve to prevent damage to the active material. Further, the Mg compound and/or Li compound may be contained in terms of reducing the ratio of the irreversible phase (for example, $SiO_2$) of the silicon-based oxide particles to increase the efficiency of the active material.

The content of the Mg element or Li element may be confirmed by ICP analysis. For the ICP analysis, after a predetermined amount (about 0.01 g) of the negative electrode active material is exactly aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of the Mg element or Li element using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the Mg element or Li element content of the prepared negative electrode active material may be analyzed by converting the total sum so as to be the theoretical value.

When Mg and/or Li are/is included in the silicon-based oxide particles, the content of each of the elements may be 0.1 atm% to 20 atm% with respect to 100 atm% of Si element.

According to an exemplary embodiment, the silicon-based oxide particles may further include a carbon layer provided on at least a part of the surface thereof.

The carbon layer may cover the entire surface of the silicon-based oxide particles, but may cover only a portion of the surface. Conductivity is imparted to the silicon-based oxide particles by the carbon layer, and the volume change of a negative electrode active material including the silicon-based oxide particles is effectively suppressed, so that the service life characteristics of the battery may be further improved.

In an exemplary embodiment of the present specification, the carbon layer may include at least any one of amorphous carbon and crystalline carbon.

The crystalline carbon may further improve the conductivity of the silicon-based oxide particles. The crystalline carbon may include at least any one selected from the group consisting of fullerene, carbon nanotube and graphene.

The amorphous carbon may suppress the expansion of the silicon-based oxide particles by appropriately maintaining the strength of the carbon layer. The amorphous carbon may be a carbon-based material formed using at least any one carbide selected from the group consisting of tar, pitch and other organic materials, or a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment, the carbon layer may be included in an amount of 1 wt% to 50 wt%, specifically 5 wt% to 45 wt%, and more specifically 8 wt% to 40 wt%, based on total 100 wt% of the silicon-based oxide particles. When the above range is satisfied, the conductivity of the negative electrode active material is improved, and the volume change of the negative electrode active material during the charging and discharging of a battery is readily suppressed, so that the service life characteristics of the battery may be improved.

In an exemplary embodiment, the carbon layer may have a thickness of 1 nm to 500 nm, specifically 5 nm to 300 nm. When the above range is satisfied, the volume change of the negative electrode active material is readily suppressed and side reactions between an electrolyte solution and the negative electrode active material are suppressed, so that the service life characteristics of a battery may be improved.

When the silicon-based oxide particles include Mg and/or Li, the particles may be prepared by a method including doping the silicon-based oxide particles with Mg and/or Li.

For example, the silicon-based oxide particles including Mg may use an in-situ doping method. In one example, in the preparing of the silicon-based oxide particles including Mg, the silicon-based oxide particles may be formed through forming a mixed gas by vaporizing a powder in which a Si powder and a $SiO_2$ powder are mixed and Mg, respectively, and then mixing the vaporized powder and Mg, and heat-treating the mixed gas in a vacuum state at 800°C to 950°C. As another example, in the preparing of the silicon-based oxide particles including Mg, the silicon-based oxide particles may be formed through forming a mixed gas by mixing a powder in which a Si powder and a $SiO_2$ powder are mixed and Mg, and then vaporizing the powder and Mg; and heat-treating the mixed gas in a vacuum state at 800°C to 950°C.

The mixed powder of the Si powder and the $SiO_2$ powder may be vaporized by performing the heat treatment at 1,000°C to 1,800°C or 1,200°C to 1,500°C, and the Mg powder may be vaporized by performing the heat treatment at 500°C to 1,200°C or 600°C to 800°C. By allowing the materials to react in a gas state as described above, Mg may be uniformly distributed in the silicon-based oxide particles. In the silicon-based oxide particles, the Mg compound phase may include the above-described Mg silicates, Mg silicides, Mg oxides, and the like. The particle diameter of the silicon-based oxide particles including Mg produced by the method described above may be adjusted by a pulverization method such as a mechanical milling method, if necessary.

As another example, silicon-based oxide particles including Li may be doped by an ex-situ doping method. For example, the distributing of the Li in the silicon-based oxide particles may include forming a carbon layer on the surface of silicon-based oxide particles, and distributing Li in silicon-based oxide particles on which the carbon layer is formed.

The forming of the carbon layer on the surface of the silicon-based oxide particles may be performed by a method of injecting a carbon-based raw material gas such as methane gas and performing a heat treatment in a rotary tubular furnace. Specifically, a carbon layer may be formed by introducing the silicon-based oxide particles into a rotary tubular furnace, increasing the temperature to 800°C to 1,150°C, or 900°C to 1,050°C, or 950°C to 1,000°C at a rate of 3 to 10°C/min or about 5°C/min, flowing an argon gas and a carbon-based material raw material gas while rotating the rotary tubular furnace, and performing a heat treatment for 30 minutes to 8 hours.

The distributing of the Li in the silicon-based oxide particles on which the carbon layer is formed may be performed by mixing silicon-based oxide particles on which a carbon layer is formed; a lithium metal powder or a lithium precursor, for example, LiOH, and $Li_2O$, and performing heat-treating the resulting mixture at 400°C to 1200°C, if necessary. Alternatively, the step may be performed using an electrochemical method.

Silicon-based oxide particles including both Mg and Li may also be prepared by performing both the in-situ doping of Mg and the ex-situ doping of Li described above, if necessary.

As an example, the method may include forming a carbon layer on at least a part of the surface of the silicon oxide particles, and doping the silicon oxide particles on which the carbon layer is formed with Mg and Li.

Before or after the carbon layer is formed, the particle diameter of the silicon-based oxide particles may be adjusted by a pulverization method such as a mechanical milling method, if necessary.

The forming of the carbon layer on the surface of the silicon-based oxide particles may be performed by a method of injecting a carbon-based raw material gas such as methane gas and performing a heat treatment in a rotary tubular furnace as an example. Specifically, a carbon layer may be formed by introducing the silicon-based oxide particles into a rotary tubular furnace, increasing the temperature to 800°C to 1,150°C, or 900°C to 1,050°C, or 950°C to 1,000°C at a rate of 3 to 10°C/min or about 5°C/min, flowing an argon gas and a carbon-based material raw material gas while rotating the rotary tubular furnace, and performing a heat treatment for 30 minutes to 8 hours.

The doping of the silicon-based oxide particles on which the carbon layer is formed with Li and Mg may be performed by mixing silicon-based oxide particles on which a carbon layer is formed and doping material, for example, a magnesium metal powder or a magnesium precursor, for example, MgO; a lithium metal powder or a lithium precursor, for example, LiOH and $Li_2O$, and heat-treating the resulting mixture at 400°C to 1200°C, if necessary. Alternatively, the step may be performed using an electrochemical method.

According to yet another exemplary embodiment of the present invention, the silicon-based oxide particles may have an average particle diameter ($D_{50}$) of 1 um to 30 um. The silicon-based oxide particles may have an average particle diameter ($D_{50}$) of specifically 3 um to 20 $\mu$m, and more specifically 5 um to 10 um. When the above range is satisfied, side reactions between the negative electrode active material and an electrolyte solution may be controlled, and the discharge capacity and initial efficiency of the battery may be effectively implemented. In the present specification, an average particle diameter ($D_{50}$) may be defined as a particle diameter corresponding to 50% of a cumulative volume in a particle diameter distribution curve of the particles. The average particle diameter ($D_{50}$) may be measured using, for example, a laser diffraction method. The laser diffraction method can generally measure a particle diameter of about several mm from the submicron region, and results with high reproducibility and high resolution may be obtained.

According to yet another exemplary embodiment of the present invention, the silicon-based oxide particles may have a BET specific surface area of 0.01 $m^2/g$ to 150 $m^2/g$. The silicon-based oxide particles may have a BET specific surface area of preferably 0.1 to 100.0 $m^2/g$, particularly preferably 0.2 $m^2/g$ to 80.0 $m^2/g$, specifically 0.6 $m^2/g$ to 20 $m^2/g$, and more specifically 0.8 $m^2/g$ to 15 $m^2/g$. When the above range is satisfied, side reactions between an electrolyte solution and the negative electrode active material during the charging and discharging of a battery may be reduced, so that the service life characteristics of the battery may be improved. The BET surface area may be measured by a Brunauer-Emmett-Teller (BET) method. For example, the specific surface area of the silicon-based oxide particle may be measured by a BET six-point method by a nitrogen gas adsorption distribution method using a porosimetry analyzer (Bell Japan Inc., Belsorp-II mini).

According to yet another exemplary embodiment of the present invention, the silicon-based oxide particles may further include Si crystal grains. The Si crystal grains may have a particle diameter of 1 nm to 15 nm.

According to an additional exemplary embodiment of the present application, in the lithium secondary battery according to the above-described exemplary embodiments, the negative electrode active material may further include a carbon-based active material.

In an exemplary embodiment of the present application, the negative electrode active material may include a carbon-based active material, and specifically, the carbon-based active material may be graphite. The graphite may be natural graphite, black lead graphite or a mixture thereof. Based on 100 parts by weight of the entire negative electrode active material included in the negative electrode active material layer, the carbon-based active material may be included in an amount of more than 0 parts by weight and 85 parts by weight or less.

According to an additional exemplary embodiment of the present application, in the lithium secondary battery according to the above-described exemplary embodiment, the negative electrode active material layer may further include a negative electrode binder in addition to a silicon-based oxide and a carbon-based active material.

The negative electrode binder serves to improve the bonding between negative electrode active material particles and the adhesion between the negative electrode active material particles and the negative electrode current collector. As the negative electrode binder, those known in the art may be used, and non-limiting examples thereof may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder may be included in an amount of 0.1 parts by weight or more and 50 parts by weight or less, for example, preferably 0.3 parts by weight or more and 35 parts by weight or less, and more preferably 0.5 parts by weight or more and 20 parts by weight or less, based on 100 parts by weight of the negative electrode active material layer.

The negative electrode active material layer may further include a conductive material. The conductive material included in the negative electrode active material layer is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a carbon fluoride powder, an aluminum powder, and a nickel powder; a conductive whisker such as zinc oxide and potassium titanate; a conductive metal oxide such as titanium oxide; a conductive material such as polyphenylene derivatives, and the like. The content of the conductive material in the negative electrode active material layer may be 0.01 parts by weight to 30 parts by weight, preferably 0.1 parts by weight to 5 parts by weight, with respect to 100 parts by weight of the negative electrode active material layer.

In an exemplary embodiment of the present application, the positive electrode includes a positive electrode current collector and a positive electrode active material layer formed on the positive electrode current collector and including the positive electrode active material.

The positive electrode current collector is not particularly limited as long as the collector has conductivity without causing a chemical change to a battery, and for example, it is possible to use stainless steel, aluminum, nickel, titanium, calcined carbon, or aluminum or stainless steel whose surface is treated with carbon, nickel, titanium, silver, and the like. Further, the positive electrode current collector may typically have a thickness of 1 um to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

In an exemplary embodiment of the present application, the negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 1 um to 500 $\mu$m, the thickness of the current collector is not limited thereto.

In an exemplary embodiment of the present application, the positive electrode and negative electrode active material layers may a thickness of 20 um or more and 500 um or less, preferably 50 um or more and 200 um or less. The thickness of the positive electrode active material layer may be 90% to 110%, for example, 95% to 105% of the thickness of the negative electrode active material layer, and the thicknesses of the positive electrode and negative electrode active material layers may be the same.

In an exemplary embodiment of the present application, a ratio (C/A) of the efficiency (C) of the positive electrode and the efficiency (A) of the negative electrode may be 1 or less, preferably, less than 1. The ratio (C/A) may be 0.8 or more, preferably 0.9 or more, more preferably 0.95 or more, and for example, 0.96 or more, or 0.97 or more. Furthermore, in an exemplary embodiment of the present application, the difference between the efficiency (C) of the positive electrode and the efficiency (A) of the negative electrode may be 10% or less, for example, 5% or less, or 3% or less. Further, in an exemplary embodiment of the present application, the efficiency (C) of the positive electrode and the efficiency (A) of the negative electrode are each preferably 80% or more, more preferably 83% or more, and even more preferably 85% or more. When the positive electrode and the negative electrode have the positive electrode and negative electrode efficiencies as described above, and it is possible to express a target high capacity from the initial stage while the positive electrode irreversible capacity is larger.

In an exemplary embodiment of the present application, the ratio (AA/BB) of the content (AA) of the additive represented by Chemical Formula A with respect to 100 parts by weight of the positive electrode active material to the content (BB) of the silicon-based oxide with respect to 100 parts by weight of the negative electrode active material may be 0.01 to 0.1, more preferably 0.015 to 0.06, and even more preferably 0.02 to 0.04.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolytic solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates, e.g. ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

A lithium secondary battery according to an exemplary embodiment of the present invention may be a cylindrical battery. The cylindrical battery means that the form of the battery itself, which includes an assembly including a positive electrode, a negative electrode, a separator and an electrolyte, is cylindrical, and specifically, may be composed of a cylindrical can, a battery assembly provided inside the cylindrical can, and a top cap. It is desirable to use a cylindrical battery, which is free depending on the amount of gas compared to the pouch battery, but the present invention is not limited thereto.

An additional exemplary embodiment of the present invention provides a battery module including the above-described cylindrical battery as a unit cell and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Since the lithium secondary batteries according to exemplary embodiments of the present invention stably exhibit excellent discharge capacity, output characteristics and cycle performance, the lithium secondary battery may be used as a power source not only for a mobile device such as a mobile phone, a laptop-sized computer, and a digital camera, but also for a medium- or large-sized device selected from the group consisting of an electric vehicle, a hybrid electric vehicle, a plug-in hybrid electric vehicle, and a power storage system. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### <Example 1>

An aluminum foil having a thickness of 30 um was coated with a composition for forming a positive electrode active material layer, including a lithium composite transition metal compound which has contents of 93.3 mol% of Ni, 4.9 mol% of Co, and 1.8 mol% of Mn among metals except for lithium as a positive electrode active material and is in the form of a single particle, and 98.04 parts by weight (0.5 parts by weight based on 100 parts by weight of a positive electrode active material) of a $Li_6Co_{0.7}Zn_{0.25}Al_{0.05}O_4$ additive, 1 part by weight of PVDF as a binder, and a CNT pre-dispersion including 0.8 parts by weight of CNT as a conductive material and 0.16 parts by weight of a dispersing agent, based on 100 parts by weight of the positive electrode active material layer, so as to have a thickness of 103 um in a dry state, and then the coated aluminum foil was dried to manufacture a positive electrode.

A copper foil having a thickness of 15 um was coated with a composition for forming a negative electrode active material, including 97.7 parts by weight of artificial graphite and natural graphite (7 : 3 weight ratio, 85 parts by weight based on 100 parts by weight of a negative electrode active material) as a negative electrode active material, and a silicon-based oxide SiO (15 parts by weight based on 100 parts by weight of the negative electrode active material), 1.15 parts by weight of styrene-butadiene rubber (SBR) as a binder and 1 part by weight of carboxymethyl cellulose (CMC) and further including a CNT pre-dispersion including 0.09 parts by weight of a dispersing agent and 0.06 parts by weight of a single-walled CNT, based on 100 parts by weight of the negative electrode active material layer so as to have a thickness of 86 um in a dry state, and then the coated copper foil was dried to manufacture a negative electrode.

The positive electrode and negative electrode were stacked with a separator therebetween, and an electrolyte solution (1.4 M $LiPF_6$, ethylmethyl carbonate (EMC)/dimethyl carbonate (DMC) = 20/5/75 (vol%), succinonitrile (SN) 1% and fluoroethylene carbonate (FEC) 10%) was injected to manufacture a battery.

The content of the additive was set to 0.5 parts by weight based on 100 parts by weight of the positive electrode active material such that the positive electrode efficiency was about 86%, and a positive electrode slurry was prepared as a composition for forming a positive electrode active material layer, including the additive, and then the viscosity of the slurry was measured according to a storage box in an environment of 40°C and RH 10%, and the results are shown in Table 1.

### <Example 2>

A negative electrode was manufactured in the same manner as in Example 1, except that based on 100 parts by weight of the negative electrode active material, the content of a silicon-based oxide SiO was 10 parts by weight.

### <Example 3>

A negative electrode was manufactured in the same manner as in Example 1, except that based on 100 parts by weight of the negative electrode active material, the content of a silicon-based oxide SiO was 20 parts by weight.

**<Comparative Example 1>**

A positive electrode was manufactured in the same manner as in Example 1, except that the additive included in the positive electrode active material layer was $LiNiO_2$ (2 parts by weight based on 100 parts by weight of the positive electrode active material).

The content of $LiNiO_2$ was set to 2 parts by weight based on 100 parts by weight of the positive electrode active material such that the positive electrode efficiency was about 86%, and the slurry viscosity was measured in the same manner as in Example 1, and the results are shown in Table 1.

[Table 1]

|  | Day 0 | Day 1 | Day 2 | Day 3 |
|---|---|---|---|---|
| Comparative Example 1 | 4,600 cps | 8,200 cps | 15,000 cps | gelation |
| Example 1 | 4,100 cps | 5,000 cps | 6,180 cps | 6,900 cps |

Referring to Table 1, it could be confirmed that Example 1 includes an additive represented by Chemical Formula A according to the present invention, and is advantageous in slurry stability by preparing a positive electrode slurry as a composition for forming a positive electrode active material layer, and then maintaining a viscosity range of 10,000 cps or less without exceeding a viscosity of 10,000 cps until day 3 of storage in an environment of 40°C and RH 10% or without being gelled.

In contrast, it could be confirmed that Comparative Example 1 includes $LiNiO_2$ instead of the additive represented by Chemical Formula A according to the present invention, and a positive electrode slurry was prepared as a composition for forming a positive electrode active material layer, and then the viscosity on day 2 of storage exceeded 10,000 cps in an environment of 40°C and RH 10%, and the positive electrode slurry was gelled on day 3 of storage. It can be confirmed that in the case of $LiNiO_2$, the viscosity exceeds 10,000 cps due to the rapid increase in viscosity and gelation occurs, which may affect the processability during the manufacture of the electrode, and thus, may cause a problem in slurry stability.

**<Comparative Example 2>**

A positive electrode was manufactured in the same manner as in Example 1, except that a lithium composite transition metal compound, which has contents of 93.3 mol% of Ni, 4.9 mol% of Co, and 1.8 mol% of Mn among the metals except for lithium as a positive electrode active material and is in the form of secondary particles, was included.

**<Comparative Example 3>**

A positive electrode was manufactured in the same manner as in Example 1, except that a lithium composite transition metal compound, which among the metals except for lithium has contents of 60 mol% of Ni, 20 mol% of Co, and 20 mol% of Mn as a positive electrode active material.

The types of lithium composite transition metal compounds and the contents (based on 100 parts by weight of the negative electrode active material) of a silicon-based oxide SiO in Examples 1 to 3 and Comparative Examples 2 and 3 are shown in Table 2.

[Table 2]

|  | Positive electrode | Negative electrode | Design capacity |
|---|---|---|---|
| Example 1 |  | SiO 15% (Gr 85%) | Target |
| Example 2 | Single particle positive electrode material (Ni 93.3 mol%) + LCZAO 0.5% | SiO 10% (Gr 90%) | -5% (vs. Target) |
| Example 3 |  | SiO 20% (Gr 80%) |  |
| Comparative Example 2 | Secondary particle positive electrode material (Ni 93.3 mol%) + LCZAO 0.5% | SiO 15% (Gr 85%) |  |

(continued)

| | Positive electrode | Negative electrode | Design capacity |
|---|---|---|---|
| Comparative Example 3 | Single particle positive electrode material (Ni 60 mol%) + LCZAO 0.5% | SiO 15% (Gr 85%) | -14% (vs. Target) |

Referring to Table 2, Example 1 according to the present invention includes 15 parts by weight of a silicon-based oxide SiO and 85 parts by weight of graphite based on 100 parts by weight of the negative electrode active material, and Example 2 includes 10 parts by weight of a silicon-based oxide SiO and 90 parts by weight of graphite. It can be confirmed that Example 1 has an increase in design capacity by 5% compared to Example 2, and it can be seen that when the content of a silicon-based oxide SiO in the negative electrode active material is less than 15 parts by weight, the design capacity of the lithium secondary battery is reduced.

Meanwhile, it can be confirmed that Comparative Example 3 has a decrease in design capacity by 14% compared to Example 1. Accordingly, it can be seen that when the content of nickel in the positive electrode active material is 60 mol%, the design capacity of the lithium secondary battery is reduced by 14% compared to the case where the content of nickel is 93.3 mol%.

Further, the capacity retention rates were evaluated by charging and discharging the batteries manufactured in Examples 1 and 3 and Comparative Example 2 at 55°C and following conditions, and a 55°C cycle graph of the manufactured batteries is shown in the FIG. 1:

Charging conditions: 0.2 C 4.2 V, 250 mA cut-off at 55°C
Discharging conditions: 1/3 C 2.5 V, cut-off at 55°C
The charge retention rate was each derived by the following calculation.

$$\text{Capacity retention rate (\%) = (Nth times discharge}$$

$$\text{capacity / 1st time discharge capacity)} \times 100$$

FIG. 1 is a 55°C cycle graph in which charging and discharging are performed at 55°C, and illustrates a cycle number (N) - capacity retention rate (%) curve, and a 80% capacity retention rate needs to be satisfied during the 55°C cycle.

It could be confirmed that Example 1 includes a lithium composite transition metal compound which has contents of 93.9 mol% of Ni, 4.9 mol% of Co, and 1.8 mol% of Mn among metals except for lithium and is in the form of a single particle as the positive electrode active material according to the present invention, and has an excellent result in which the high capacity retention rate is maintained during the 55°C cycle compared to Comparative Example 2 including a lithium composite transition metal compound which has contents of 93.3 mol% of Ni, 4.9 mol% of Co and 1.8 mol% of Mn among metals except for lithium as a positive electrode active material and is in the form of secondary particles. In contrast, in the case of Comparative Example 2, it can be interpreted that while the balance between the positive electrode efficiency and the negative electrode efficiency is broken during the cycle, the capacity retention rate is rapidly decreased as the amount of negative electrode used is increased, resulting in a deterioration in cycle performance.

In Example 1, it is possible to confirm a result in which the cycle performance does not fade while the 55°C cycle is performed compared to Example 3 which includes 20 parts by weight of a silicon-based oxide SiO and 80 parts by weight of graphite based on 100 parts by weight of the negative electrode active material. This can be interpreted as the deterioration in cycle performance because when the SiO content is relatively high, the negative electrode efficiency is decreased due to the effect of the material according to the increase in the SiO content of the negative electrode, and the negative electrode is used in a relatively large amount during the cycle.

**Claims**

1. A composition for a positive electrode active material layer of a lithium secondary battery, comprising:

a positive electrode active material comprising a lithium composite transition metal compound which comprises nickel, cobalt and manganese, comprises nickel in an amount of 80 mol% or more and less than 100 mol% among the metals except for lithium and is in the form of a single particle; and

an additive represented by the following Chemical Formula A:

[Chemical Formula A] $Li_xCo_{(1-y-z-m)}Zn_yAl_zM_mO_4$

in Chemical Formula A,
M is Ti, Zr, Mn or Ni, $5 \leq x \leq 7$, $0 < y \leq 0.5$, $0 < z \leq 0.5$, $0 < y+z+m < 1$, and $0 \leq m \leq 0.5$.

**2.** The composition of claim 1, wherein the additive is comprised in an amount of 0.3 to 10 parts by weight with respect to 100 parts by weight of the entire positive electrode active material.

**3.** The composition of claim 1, wherein the lithium composite transition metal compound which comprises nickel, cobalt and manganese, comprises nickel in an amount of 80 mol% or more and less than 100 mol% among the metals except for lithium, and is in the form of a single particle is comprised in an amount of 90 parts by weight to 100 parts by weight with respect to 100 parts by weight of the entire positive electrode active material.

**4.** The composition of claim 1, further comprising a positive electrode binder and a conductive material.

**5.** The composition of claim 1, wherein the composition has a viscosity of 10,000 cps or less during storage in 40°C and RH 10% for 3 days.

**6.** A positive electrode of a lithium secondary battery, comprising:

a positive electrode current collector; and
a positive electrode active material layer provided on the positive electrode current collector and comprising the composition according to any one of claims 1 to 5.

**7.** A lithium secondary battery comprising:

a positive electrode;
a negative electrode;
a separator provided between the positive electrode and the negative electrode; and
an electrolyte,
wherein the positive electrode comprises a positive electrode current collector and a positive electrode active material layer provided on the positive electrode current collector and the negative electrode comprises a negative electrode current collector and a negative electrode active material layer provided on the negative electrode current collector, and
the positive electrode active material layer comprises the composition according to any one of claims 1 to 5.

**8.** The lithium secondary battery of claim 7, wherein the negative electrode active material layer comprises a silicon-based oxide in an amount of 15 parts by weight or more with respect to 100 parts by weight of the entire negative electrode active material.

**9.** The lithium secondary battery of claim 8, wherein the negative electrode active material layer further comprises a carbon-based active material.

**10.** The lithium secondary battery of claim 8, wherein the silicon-based oxide comprises at least one of Mg and Li.

**11.** The lithium secondary battery of claim 9, wherein the negative electrode active material layer further comprises a negative electrode binder and a conductive material.

**12.** The lithium secondary battery of claim 7, wherein the lithium secondary battery is a cylindrical battery.

**13.** A battery module comprising the lithium secondary battery according to claim 7.

**14.** A battery pack comprising the battery module of claim 13.

[Figure 1]

## INTERNATIONAL SEARCH REPORT

International application No.

**PCT/KR2022/018340**

### A. CLASSIFICATION OF SUBJECT MATTER

**H01M 4/131**(2010.01)i; **H01M 4/1391**(2010.01)i; **H01M 4/62**(2006.01)i; **H01M 4/525**(2010.01)i; **H01M 4/505**(2010.01)i; **H01M 10/052**(2010.01)i; **H01M 4/36**(2006.01)i; **H01M 4/48**(2010.01)i; **H01M 4/587**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/131(2010.01); H01M 10/052(2010.01); H01M 4/36(2006.01); H01M 4/525(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 전지(lithium battery), 양극활물질(positive electrode active material), 첨가제(additive), 단입자(single particle)

### C. DOCUMENTS CONSIDERED TO BE RELEVANT

| Category* | Citation of document, with indication, where appropriate, of the relevant passages | Relevant to claim No. |
|---|---|---|
| Y | JP 6428647 B2 (SANYO ELECTRIC CO., LTD.) 28 November 2018 (2018-11-28)<br>See claims 1 and 6; and paragraphs [0017], [0018], [0023], [0025], [0026], [0029], [0034] and [0046]. | 1-14 |
| Y | KR 10-2327532 B1 (LG CHEM, LTD.) 17 November 2021 (2021-11-17)<br>See claim 1; and paragraphs [0047], [0147] and [0156]-[0158]. | 1-14 |
| A | JP 6121454 B2 (SANYO ELECTRIC CO., LTD.) 26 April 2017 (2017-04-26)<br>See claims 1-7. | 1-14 |
| A | KR 10-2021-0119905 A (SAMSUNG SDI CO., LTD.) 06 October 2021 (2021-10-06)<br>See entire document. | 1-14 |
| A | KR 10-2017-0063408 A (LG CHEM, LTD.) 08 June 2017 (2017-06-08)<br>See entire document. | 1-14 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 March 2023** | **08 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/018340**

| Patent document cited in search report | | | Publication date (day/month/year) | Patent family member(s) | | | Publication date (day/month/year) |
|---|---|---|---|---|---|---|---|
| JP | 6428647 | B2 | 28 November 2018 | CN | 105940528 | A | 14 September 2016 |
| | | | | CN | 105940528 | B | 02 August 2019 |
| | | | | US | 10256469 | B2 | 09 April 2019 |
| | | | | US | 2016-0351905 | A1 | 01 December 2016 |
| | | | | WO | 2015-115052 | A1 | 06 August 2015 |
| KR | 10-2327532 | B1 | 17 November 2021 | CN | 113169329 | A | 23 July 2021 |
| | | | | EP | 3869594 | A1 | 25 August 2021 |
| | | | | EP | 3869594 | A4 | 22 December 2021 |
| | | | | JP | 2022-507671 | A | 18 January 2022 |
| | | | | JP | 2023-001232 | A | 04 January 2023 |
| | | | | JP | 7171918 | B2 | 15 November 2022 |
| | | | | KR | 10-2020-0059164 | A | 28 May 2020 |
| | | | | US | 2021-0408537 | A1 | 30 December 2021 |
| | | | | WO | 2020-106024 | A1 | 28 May 2020 |
| JP | 6121454 | B2 | 26 April 2017 | CN | 105103343 | A | 25 November 2015 |
| | | | | CN | 105103343 | B | 17 May 2017 |
| | | | | US | 2015-0372304 | A1 | 24 December 2015 |
| | | | | WO | 2014-118834 | A1 | 07 August 2014 |
| KR | 10-2021-0119905 | A | 06 October 2021 | CN | 113451571 | A | 28 September 2021 |
| | | | | EP | 3886217 | A1 | 29 September 2021 |
| | | | | US | 2021-0305561 | A1 | 30 September 2021 |
| KR | 10-2017-0063408 | A | 08 June 2017 | CN | 108140829 | A | 08 June 2018 |
| | | | | CN | 108140829 | B | 18 June 2021 |
| | | | | EP | 3386015 | A1 | 10 October 2018 |
| | | | | EP | 3386015 | A4 | 05 December 2018 |
| | | | | JP | 2018-532236 | A | 01 November 2018 |
| | | | | JP | 7114148 | B2 | 08 August 2022 |
| | | | | KR | 10-1989399 | B1 | 17 June 2019 |
| | | | | US | 11081694 | B2 | 03 August 2021 |
| | | | | US | 11581538 | B2 | 14 February 2023 |
| | | | | US | 2018-0261842 | A1 | 13 September 2018 |
| | | | | US | 2021-0313573 | A1 | 07 October 2021 |
| | | | | WO | 2017-095153 | A1 | 08 June 2017 |

Form PCT/ISA/210 (patent family annex) (July 2022)

**EP 4 336 585 A1**

## REFERENCES CITED IN THE DESCRIPTION

**Patent documents cited in the description**

- KR 1020210160759